# EUROPEAN PATENT APPLICATION

(11) **EP 4 570 552 A1**
(43) Date of publication of application: **18.06.2025**
(21) Application number: 23215847.7
(22) Date of filing: 12.12.2023
(51) Int. Cl.: B60K 35/10, G06V 20/59, G06F 3/01

(54) **IN-VEHICLE INFOTAINMENT SYSTEM**

(71) Applicant: Harman Becker Automotive Systems GmbH, 76307 Karlsbad (DE)
(72) Inventor: FUTTERLIEB, Marcus, 85049 Ingolstadt (DE); ALMEIDA, Gabriel, 76344 Eggenstein-Leopoldshafen (DE)
(74) Representative: Westphal, Mussgnug & Partner, Patentanwälte mbB

(57) **Abstract**

An in-vehicle infotainment system comprises a sensor configured to detect a plurality of occupants of a vehicle, a controller unit, and a plurality of displays, each display of the plurality of displays being associated with a different one of a plurality of seats of the vehicle, wherein the sensor is configured to provide sensor data concerning one or more occupants to the controller unit, the controller unit is configured, based on the sensor data, to identify the one or more detected occupants, and the controller unit is further configured, in response to identifying one or more occupants of the vehicle, for each of the one or more identified occupants, load personal content associated with the identified occupant on a display associated with a seat the identified occupant is seated on.

## Description

### TECHNICAL FIELD

The disclosure relates to an in-vehicle infotainment system and related method.

### BACKGROUND

Many in-vehicle infotainment systems today provide individual displays for different occupants of a vehicle. Each display can be controlled individually according to the likes of the respective occupants. It may even be possible to load individual user profiles on the different displays. This, however, requires specific user input when user profiles are not automatically loaded. Automatically loading respective user profiles generally requires a great amount of hardware and cabling within a vehicle in order to perform user identification

There is a need for an in-vehicle infotainment system and a method that increase driver and occupant comfort at low costs.

### SUMMARY

The in-vehicle infotainment system and related method according to the various embodiments described herein are able to identify multiple occupants of a vehicle, and control different displays associated with different occupants of the vehicle separately. In particular, personal content associated with an occupant that has been identified can be loaded on a display associated with a seat the identified occupant is seated on. This can be done with only few different hardware components and, therefore, at comparably low costs.

An in-vehicle infotainment system includes a sensor configured to detect a plurality of occupants of a vehicle, a controller unit, and a plurality of displays, each display of the plurality of displays being associated with a different one of a plurality of seats of the vehicle, wherein the sensor is configured to provide sensor data concerning one or more occupants to the controller unit, the controller unit is configured, based on the sensor data, to identify the one or more detected occupants, and the controller unit is further configured, in response to identifying one or more occupants of the vehicle, for each of the one or more identified occupants, load personal content associated with the identified occupant on a display associated with a seat the identified occupant is seated on.

A method includes providing sensor data captured by means of a sensor concerning one or more occupants of a vehicle to a controller unit, wherein the sensor is configured to detect a plurality of occupants of a vehicle, based on the sensor data, identifying one or more occupants of the vehicle by means of the controller unit, and in response to identifying one or more occupants of the vehicle, for each of the one or more identified occupants, loading personal content associated with the identified occupant on a display associated with a seat the identified occupant is seated on.

Other systems, features and advantages of the disclosure will be or will become apparent to one with skill in the art upon examination of the following detailed description and figures. It is intended that all such additional systems, methods, features and advantages included within this description be within the scope of the invention and be protected by the following claims.

### BRIEF DESCRIPTION OF THE DRAWINGS

The arrangements and methods may be better understood with reference to the following description and drawings. The components in the figures are not necessarily to scale, emphasis instead being placed upon illustrating the principles of the invention. Moreover, in the figures, the same reference numerals designate the same components throughout the different views.
Figure 1 schematically illustrates an in-vehicle infotainment system according to embodiments of the disclosure.
Figure 2 schematically illustrates an in-vehicle infotainment system according to further embodiments of the disclosure.
Figure 3 schematically illustrates, in a flow diagram, a method according to embodiments of the disclosure.

### DETAILED DESCRIPTION

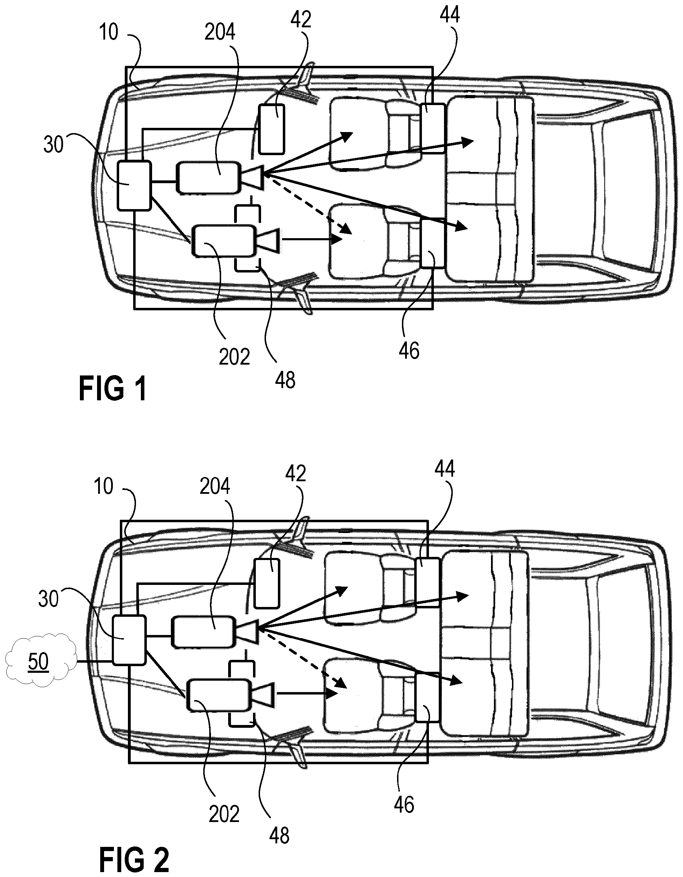

Figure 1 schematically illustrates an in-vehicle infotainment system according to embodiments of the disclosure. The in-vehicle infotainment system comprises a sensor 204 configured to detect a plurality of occupants of the vehicle 10, a controller unit 30, and a plurality of displays 42, 44, 46. Each display of the plurality of displays 42, 44, 46 is associated with a different one of a plurality of seats of the vehicle 10. That is, for example, a first display 42 may be arranged in or on a dashboard of the vehicle 10, in front of a front passenger seat. It is also possible that the first display 42 is implemented as a head-up display. That is, content may be projected on the windscreen in front of the front passenger of the vehicle 10. A second display 44, e.g., may be arranged at the back of the front passenger seat, in front of a first one of a plurality of rear passenger seats, and a third display 46, e.g., may be arranged at the back of a driver's seat, in front of a second one of the plurality of rear passenger seats. That is, each of a plurality of occupants of the vehicle 10 may watch media content on a display arranged in front of the seat they are seated on. The three displays 42, 44, 46 illustrated in Figures 1 and 2, however, are only examples. Any number of displays may be arranged at any suitable positions within a vehicle 10.

The sensor 204 is configured to provide sensor data concerning one or more occupants to the controller unit 30. The controller unit 30, based on the sensor data, is configured to identify the one or more detected occupants, and the controller unit 30 is further configured, in response to identifying one or more occupants of the vehicle 10, for each of the one or more identified occupants, load personal content associated with the identified occupant on a display associated with a seat the identified occupant is seated on. That is, different occupants of a vehicle 10 can be presented with different media content. For example, each occupant of a plurality of occupants of the vehicle 10 can watch a different movie on a display 42, 44, 46 arranged in front of the seat the respective occupant is seated on. As the different occupants are identified, personal content associated with the respective occupant can be loaded on the respective display 42, 44, 46.

Referring to Figure 2, the controller unit 30 may be in communication with a cloud or streaming service 50, and may be configured to retrieve personal content for an identified occupant from the cloud or streaming service 50. For example, a first occupant may have a personal account at a first streaming service. Once the first occupant has been identified by the controller unit 30 based on the sensor data, the controller unit 30 may automatically log in to the personal account of the first occupant at the first streaming service. The first occupant may then watch movies available to them on the first streaming service. A second occupant of the vehicle may have a personal account at the first or at a second streaming service. Once the second occupant has been identified by the controller unit 30 based on the sensor data, the controller unit 30 may automatically log in to the personal account of the second occupant at the first or at a second streaming service. The second occupant may then watch movies available to them on the first or second streaming service. This similarly applies to other occupants of the vehicle 10.

As the in-vehicle infotainment system only comprises a single sensor 204 which is able to detect a plurality of occupants of the vehicle 10, the required hardware is kept at a minimum. The sensor 204 may be a camera, for example. The camera may have a field of view of at least 40°, or at least 90° up to 140° or even more. According to one example, the camera is arranged in a dashboard of the vehicle 10, e.g., centrally in a dashboard of the vehicle 10, at a position between the driver's seat and a front passenger seat. The camera arranged in the dashboard may be directed towards a passenger compartment of the vehicle 10 and may cover at least a front passenger seat, and one or more rear passenger seats. In this way, a single camera can be used to identify a plurality of occupants of the vehicle 10. The field of view of the camera may be constant or may be variable. It is even possible that the camera is moveable. In this way, even if its field of view is comparably small, the camera may be variably directed towards any desired specific seat within the vehicle 10.

The camera may be configured to capture one or more images, and transmit the one or more images to the controller unit 30. The controller unit 30 may be configured to identify one or more occupants of the vehicle 10 in the one or more images, e.g., by means of suitable face or eye recognition techniques. A face or eyes recognized in one or more of the images captured by the camera may be compared to faces or eyes previously stored in the controller unit 30, for example. Personal data such as, e.g., login data for personal accounts, may be stored for each occupant that has previously undergone a registration process. During a registration process, the face or eyes of a user may be captured and stored by the controller unit 30, and personal data (e.g., login data) may be linked with the stored face or eyes. For occupants that are not known to the controller unit 30 (i.e. that are not registered users), personal content may not be automatically loaded on a respective display 42, 44, 46 when the respective occupants have been detected. By means of images captured by the camera, it is further possible to identify on which seat in the vehicle 10 an identified occupant is seated. This can be easily derived from a position of the occupant's face in the respective image(s).

Instead of a camera, the sensor 204 could be or could include any other kind of sensor instead which is able to detect and allow identification of a plurality of occupants of the vehicle 10. For example, the sensor 204 alternatively may be a microphone, and different occupants of the vehicle 10 may be identified by means of speech recognition instead of face or eye recognition. That is, a sample of speech of a registered occupant may be stored by the controller unit 30. An occupant, when seated in the vehicle 10, may then provide another sample of speech which may be compared to the stored samples. If a match is identified, the respective personal data may be loaded on the respective display 42, 44, 46, similar to what has been described above. If the sensor 204 is or comprises a microphone, an occupant may be required to provide a spoken indication on which seat they are currently seated in the vehicle 10, as this may be difficult to be determined automatically by means of a microphone.

In addition to detecting one or more occupants of a vehicle 10, the sensor 204 may be further configured to capture and detect gestures made by the one or more detected occupants of the vehicle 10, and provide sensor data concerning detected gestures to the controller unit 30. The controller unit 30, based on the sensor data concerning detected gestures, may be further configured to interpret the detected gestures, and perform one or more actions based on the detected gestures. Specific gestures may be defined which, when detected and interpreted, cause specific actions to be performed by the controller unit 30. For example, a first gesture, when performed by an occupant, captured by the sensor 204, and identified by the controller unit 30, may cause the in-vehicle infotainment system to present different content on the display 42, 44, 46 associated with the respective occupant. That is, an occupant may switch between different contents by merely making a specific gesture. Alternatively or additionally, it may be possible to increase or decrease a volume associated with content presented on a display 42, 44, 46 by means of a second defined gesture, increase or decrease a brightness of content presented on a display 42, 44, 46 by means of a third defined gesture, and turn off a display 42, 44, 46 by means of a fourth defined gesture. Such actions, however, are merely examples. Any other actions may generally be performed by the controller unit 30, if a certain defined gesture has been detected and identified.

It is generally possible that not only occupants of the vehicle 10, but also a driver of the vehicle 10 is identified by means of the sensor data provided by the sensor 204. Many vehicles today, however, comprise additional sensors. Such additional sensors may be configured to provide sensor data concerning a driver of the vehicle 10. Additional sensors may be included in any kind of driver assistance systems, e.g., driver monitoring systems. That is, the in-vehicle infotainment system may include or may be coupled to an additional sensor 202 configured to detect a driver of the vehicle 10. The additional sensor 202 may be configured to provide sensor data concerning the detected driver to the controller unit 30, similar to what has been described with the sensor 204 and one or more occupants of the vehicle 10 above. The controller unit 30 may be configured, based on the sensor data, to identify the detected driver. It is generally possible that personalized video content is provided to a driver of the vehicle 10 on a display 48 (e.g., main infotainment display or cluster display) once they have been identified. When the vehicle 10 is in an autonomous driving mode (e.g., SAE level 3 or higher), for example, presenting video content even to the driver of a vehicle 10 may be possible. However, presenting video content to a driver manually driving the vehicle 10 may be hazardous, as it may distract the driver. Alternatively or additionally, loading a personal profile for a driver of the vehicle 10 in response to identifying the driver, therefore, may comprise presenting audio content to the driver. Such audio content may be retrieved from a personal account of the driver with a streaming service 50, for example. Any other action may generally be performed by the in-vehicle infotainment system in response to identifying a driver.

The in-vehicle infotainment system according to embodiments of the disclosure may be arranged in a vehicle 10. As has been described above, the sensor 204 of the in-vehicle infotainment system may be a camera. A camera may be arranged in a dashboard of the vehicle 10, for example. Alternatively, a camera may be arranged in any other suitable position allowing an adequate view on the passenger compartment of the vehicle 10, e.g., attached or close to a rear view mirror, in a roof liner, etc. A field of view of the camera may be directed towards a passenger compartment of the vehicle 10 and may cover at least a front passenger seat, and one or more rear passenger seats. This is indicated by means of arrows in Figures 1 and 2. Optionally, the field of view of the camera may also be directed towards a driver's seat of the vehicle 10 (indicated by means of a dashed arrow in Figures 1 and 2). In this way, a driver of the vehicle 10 may also be identified by means of sensor data provided by the camera. A driver, however, can also be identified by means of a separate sensor 202.

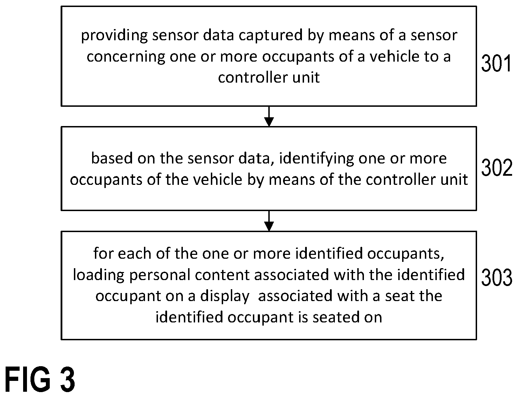

Referring to Figure 3, a method according to embodiments of the disclosure is schematically illustrated by means of a flow diagram. A method according to embodiments of the disclosure comprises providing sensor data captured by means of a sensor 204 concerning one or more detected occupants to a controller unit 30, wherein the sensor 204 is configured to detect a plurality of occupants of a vehicle 10 (step 301), based on the sensor data, identifying one or more occupants of the vehicle 10 by means of the controller unit 30 (step 302), and, in response to identifying one or more occupants of the vehicle 10, for each of the one or more identified occupants, loading personal content associated with the identified occupant on a display 42, 44, 46 associated with a seat the identified occupant is seated on (step 303).

It may be understood, that the illustrated systems and methods are merely examples. While various embodiments of the invention have been described, it will be apparent to those of ordinary skill in the art that many more embodiments and implementations are possible within the scope of the invention. In particular, the skilled person will recognize the interchangeability of various features from different embodiments. Although these techniques and systems have been disclosed in the context of certain embodiments and examples, it will be understood that these techniques and systems may be extended beyond the specifically disclosed embodiments to other embodiments and/or uses and obvious modifications thereof. Accordingly, the invention is not to be restricted except in light of the attached claims and their equivalents.

The description of embodiments has been presented for purposes of illustration and description. Suitable modifications and variations to the embodiments may be performed in light of the above description or may be acquired from practicing the methods. The described arrangements are exemplary in nature, and may include additional elements and/or omit elements. As used in this application, an element recited in the singular and proceeded with the word "a" or "an" should be understood as not excluding plural of said elements, unless such exclusion is stated. Furthermore, references to "one embodiment" or "one example" of the present disclosure are not intended to be interpreted as excluding the existence of additional embodiments that also incorporate the recited features. The terms "first," "second," and "third," etc. are used merely as labels, and are not intended to impose numerical requirements or a particular positional order on their objects. The subject matter of the present disclosure includes all novel and non-obvious combinations and sub-combinations of the various systems and configurations, and other features, functions, and/or properties disclosed. The following claims particularly point out subject matter from the above disclosure that is regarded as novel and non-obvious.

## Claims

1. An in-vehicle infotainment system comprising
a sensor (204) configured to detect a plurality of occupants of a vehicle (10);
a controller unit (30); and
a plurality of displays (42, 44, 46), each display of the plurality of displays (42, 44, 46) being associated with a different one of a plurality of seats of the vehicle (10), wherein
the sensor (204) is configured to provide sensor data concerning one or more occupants to the controller unit (30),
the controller unit (30) is configured, based on the sensor data, to identify the one or more detected occupants, and
the controller unit (30) is further configured, in response to identifying one or more occupants of the vehicle (10), for each of the one or more identified occupants, load personal content associated with the identified occupant on a display associated with a seat the identified occupant is seated on.

2. The in-vehicle infotainment system of claim 1, wherein the sensor (204) is a camera.

3. The in-vehicle infotainment system of claim 2, wherein the camera has a field of view of at least 40°.

4. The in-vehicle infotainment system of claim 2 or 3, wherein identifying the one or more occupants comprises detecting a face or eyes of one or more occupants in one or more images captured by the camera by means of face or eye recognition techniques.

5. The in-vehicle infotainment system of claim 4, wherein identifying the one or more occupants further comprises comparing a face or eyes detected in one or more of the images to faces or eyes previously stored in the controller unit (30).

6. The in-vehicle infotainment system of any of the preceding claims, wherein the controller unit (30) is in communication with a cloud or streaming service (50), and is configured to retrieve personal content for an identified occupant from the cloud or streaming service (50).

7. The in-vehicle infotainment system of any of the preceding claims, wherein
the sensor (204) is further configured to detect gestures made by the one or more detected occupants of the vehicle (10), and provide sensor data concerning detected gestures to the controller unit (30), and
the controller unit (30), based on the sensor data concerning detected gestures, is further configured to interpret the detected gestures, and perform one or more actions based on the detected gestures.

8. The in-vehicle infotainment system of claim 7, wherein the one or more actions comprise at least one of changing a content presented on a display (42, 44, 46), increasing or decreasing a volume associated with content presented on a display, increasing or decreasing a brightness of content presented on a display (42, 44, 46), and turning off a display (42, 44, 46).

9. The in-vehicle infotainment system of any of the preceding claims, further comprising an additional sensor (202) configured to detect a driver of the vehicle (10), wherein
the additional sensor (202) is configured to provide sensor data concerning a driver to the controller unit (30),
the controller unit (30) is configured, based on the sensor data, to identify the driver.

10. A vehicle (10) comprising the in-vehicle infotainment system of any of claims 1 to 9.

11. The vehicle (10) of claim 10, wherein the sensor (204) is a camera arranged in a dashboard of the vehicle (10).

12. The vehicle (10) of claim 11, wherein a field of view of the camera is directed towards a passenger compartment of the vehicle (10) and covers at least a front passenger seat, and one or more rear passenger seats.

13. A method comprising,
providing sensor data captured by means of a sensor (204) concerning one or more occupants of a vehicle (10) to a controller unit (30), wherein the sensor (204) is configured to detect a plurality of occupants of a vehicle (10);
based on the sensor data, identifying one or more occupants of the vehicle (10) by means of the controller unit (30), and
in response to identifying one or more occupants of the vehicle (10), for each of the one or more identified occupants, loading personal content associated with the identified occupant on a display (42, 44, 46) associated with a seat the identified occupant is seated on.
